Europäisches Patentamt

European Patent Office

Office européen des brevets

Publication number: **0 367 269**
A2

# EUROPEAN PATENT APPLICATION

Application number: 89120309.3

Date of filing: 02.11.89

Int. Cl.5 **H01J 9/20** , **H01J 29/87** ,
**H01J 29/88**

Priority: 04.11.88 JP 277306/88
04.11.88 JP 277307/88
08.11.88 JP 280500/88
15.05.89 JP 118518/89
15.05.89 JP 118519/89
17.05.89 JP 121566/89

Date of publication of application:
09.05.90 Bulletin 90/19

Designated Contracting States:
DE FR GB NL

Applicant: ASAHI GLASS COMPANY LTD.
No. 1-2, Marunouchi 2-chome
Chiyoda-ku, Tokyo(JP)

Inventor: Sugawara, Tsunehiko
4-14-6, Mitsuwadai
Chiba-shi Chiba-ken(JP)
Inventor: Nakata, Hiroshi
2-13-21, Higashinakayama
Funabashi-shi Chiba-ken(JP)
Inventor: Murakami, Toshihide
2-6-1, Kitahon-cho
Funabashi-shi Chiba-ken(JP)
Inventor: Katayama, Yoshihito
3-8-8, Chidori
Ota-ku Tokyo(JP)
Inventor: Iura, Junichi
543, Sanmai-cho Kanagawa-ku
Yokohama-shi Kanagawa-ken(JP)
Inventor: Kawaguchi, Toshiyasu
1-29-7, Moridai Atsugi-shi
Kanagawa-ken(JP)

Representative: Wächtershäuser, Günter, Dr.
Tal 29
D-8000 München 2(DE)

Method for reinforcing glass, film-forming composition for the reinforcement of glass and reinforced glass articles.

A method for reinforcing glass, which comprises coating a film-forming composition comprising one or more metal alkoxides and fine metal oxide particles, on the surface of the glass, in such an amount that a metal oxide coating film to be formed by said composition would have a thickness of at least 1 μm, followed by heat treatment to form a hardened metal oxide coating film.

# METHOD FOR REINFORCING GLASS, FILM-FORMING COMPOSITION FOR THE REINFORCEMENT OF GLASS AND REINFORCED GLASS ARTICLES

The present invention relates to a method for reinforcing glass, a film-forming composition for the reinforcement of glass useful for the method and glass articles such as cathode ray tubes reinforced by the method. More particularly, the present invention relates to a method for reinforcing glass by coating a composition capable of forming a reinforcing coating film such as metal oxide film on the surface of glass in order to increase the fracture strength of glass.

Heretofore, two methods have been known to increase the fracture strength of glass, i.e. an air quenching method wherein glass heated to a temperature of about the softening point is quenched, and an ion-exchange method wherein alkali ions contained in glass are ion-exchanged by another alkali ions. However, the air quenching method requires treatment at a high temperature at a level of $700°$ C, whereby e.g. a cathode ray tube is likely to undergo a deformation. On the other hand, the ion exchange method has disadvantages such as high production costs and a decrease in the strength due to the transfer of ions resulting from the rise of the temperature. Further, the chemical composition of glass to be effectively reinforced by this method is rather limited.

Etching treatment of a glass surface with e.g. hydrofluoric acid or ammonium fluoride to remove flaws on the surface, or fire polish to melt the glass surface, is effective for improving the strength. However, such is not a practical method for the improvement of the strength, since the glass surface tends to be susceptible to damages after such treatment.

It is conceivable to apply a protective coating on the surface treated by etching or by fire polish to impart abrasion resistance. It has been proposed to coat a sol prepared by hydrolyzing a metal alkoxide on the glass surface, followed by heat treatment to form a reinforcing film. However, such a reinforcing film has been limited in its thickness to a level of about 3,000 Å at best. In the case of such a thin coating film, even if such a film is highly densed and highly hardened, it is unavoidable that the film is likely to peel off or receive flaws by the abrasion during the processing steps, and the reinforcing effects by the coating film tend to be reduced or totally lost.

Now, the fracture strength of a cathode ray tube will be described in detail.

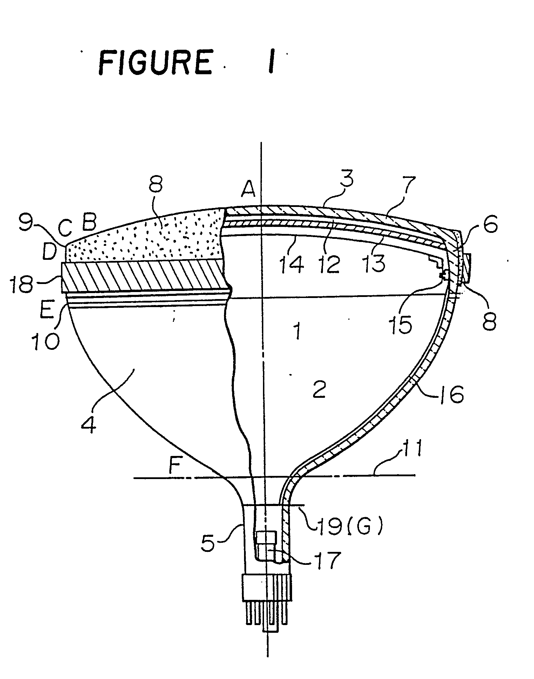

As shown in a partial cross sectional view in Figure 1, a cathode ray tube commonly used for e.g. television, has a glass bulb 2 comprising a panel portion 3 displaying a projected image, a funnel portion 4 mounting a deflecting coil and a neck portion 5 accommodating an electron gun 17. In the glass bulb of the cathode ray tube as a vacuum vessel, a stress (hereinafter referred to as a vacuum stress) is created since atmospheric pressure is exerted to the exterior surface. As well as a compression region, a tension region due to the asymmetrical structure as opposed to a spherical shell, extends over a relatively wide range, as shown in Figure 1. Accordingly, if the glass bulb of a cathode ray tube does not have adequate structural strength, a static fatigue fracture due to the atmospheric pressure will result, whereby it will fail to function as a cathode ray tube.

Further, during the process for the production of a cathode ray tube, particularly when it is maintained at a high temperature of a level of about $380°$ C for evacuation, a thermal stress will additionally be imparted by the heating process. In an extreme case, a vigorous implosion is likely to take place due to an instantaneous inflow of air, and the destructive force may affect also the surrounding environment. To guarantee the prevention of such destruction, the glass bulb is designed to be durable against a hydraulic pressure $P_s$ of at least 3.0 kg/cm$^2$, where the hydraulic pressure strength is represented by a pressure at breakage when the glass bulb having its surface scratched with # 150 Emery paper taking into consideration the strength of scratching imparted to the glass surface during the process for the production of the glass bulb and the cathode ray tube and the practical useful life of the cathode ray tube, is subjected to a saturation test of pressure whereby the pressure to the glass bulb is continuously raised by air pressure or hydraulic pressure. The practical fracture strength $\sigma_{SG}$ of the glass bulb thus scratched, is as low as from 200 to 250 kg/cm$^2$ due to flaws on the glass bulb surface.

On the other hand, in view of the fatigue fracture under the vacuum stress, the probability of breakage starting from the region where the maximum tension $\sigma_{Vmax}$ exists, is the highest. Therefore, in order to obtain a cathode ray tube having the above-mentioned guaranteed value of the hydraulic pressure strength $P_s$ of at least 3.0 kg/cm$^2$, the condition represented by the formula:

$(P_s/P_a) \, \sigma_{Vmax} < \sigma_{SG}$ wherein $P_a$ is the atmospheric pressure, which is about 1.03 kg/cm$^2$, should be satisfied in view of the linearlity of an elastic body.

Namely, since $\sigma_{Vmax} < \sigma_{SG}/3$, the geometric structure such as the wall thickness, shape, etc. of the glass bulb, are designed so that $\sigma_{Vmax}$ is controlled to be from 60 to 80 kg/cm$^2$.

EP 0 367 269 A2

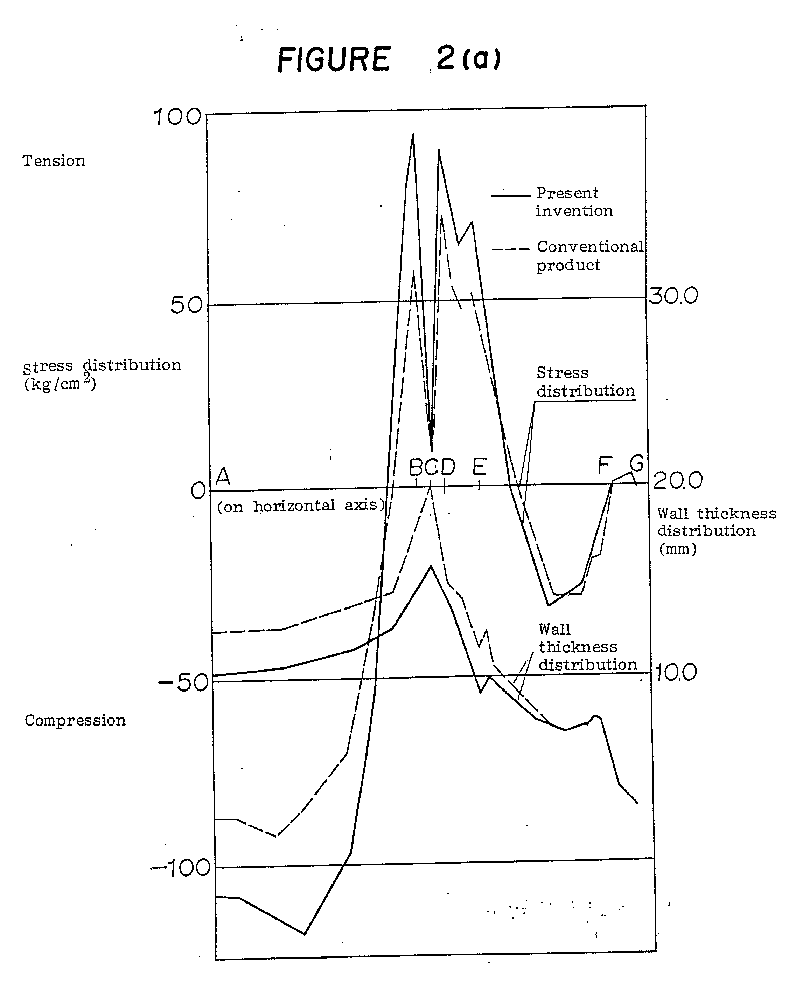

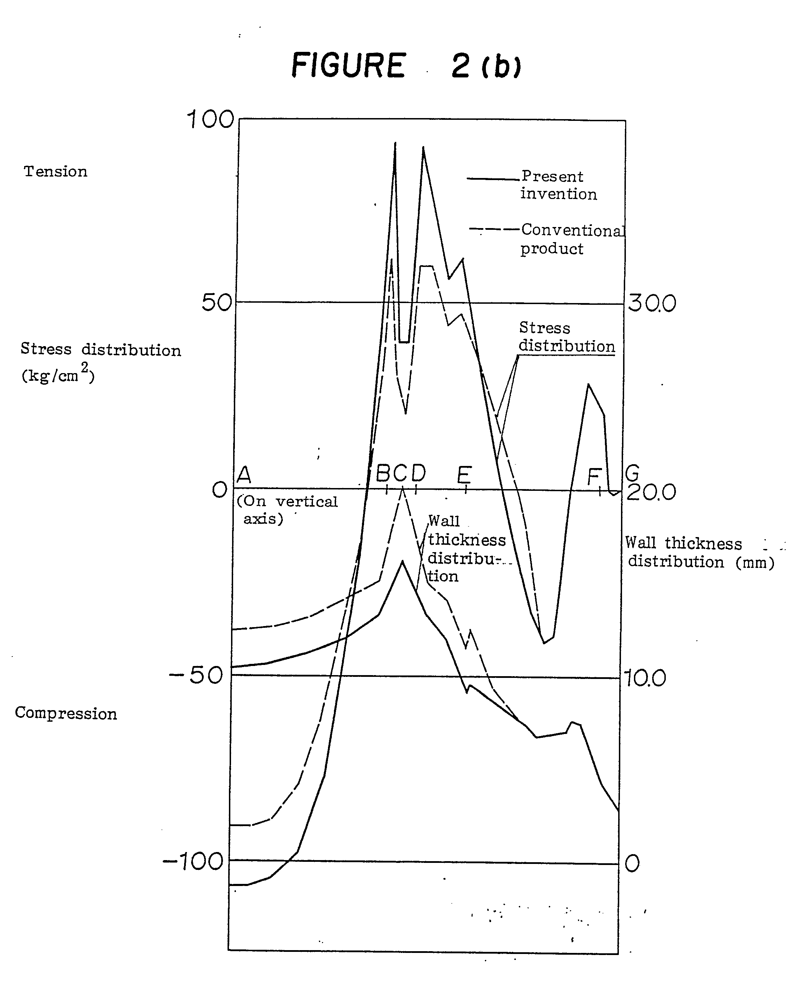

As such a conventional example, the relation between the wall thickness distribution and the vacuum stress distribution on the exterior surface on the horizontal axis or on the vertical axis of a glass bulb used for a cathode ray tube for a 29 inch color television with an aspect ratio of the useful screen being substantially 4:3, is shown by a broken line in Figures 2(a) and (b). In Figures 2(a) and (b), A to G indicate the positions on the horizontal axis or on the vertical axis of the glass bulb. Namely, A indicates the face center, B indicates the starting point of $\sigma_{V1}$, C indicates blend R, D indicates the starting point of $\sigma_{V2}$, E indicates the sealing portion, F is a reference line, and G indicates a neck sealing portion (see Figure 1). It is evident that the glass bulb has a structure satisfying the above-mentioned condition ($\sigma_{Vmax}$ being from 60 to 80 kg/cm$^2$).

In recent years, information recording disks using doughnut-shaped glass substrates, such as magnetic disks, optical disks and magneto-optical disks have attracted an attention. A magnetic disk using a glass substrate is excellent with respect to the flatness and freeness from the surface defects as compared with the one using an aluminum alloy substrate and thus has a high recording density and consistent quality. An optical disk or magneto-optical disk using a glass substrate is excellent in the flatness as compared with the one using a plastic material and has a merit that a change with time of the quality or the moisture absorption is blittle.

However, as compared with the metal material or plastic material, glass is brittle and is likely to break during the handling or during its use as an information recording disk, and it has a problem that it is inferior in the mechanical durability.

In an actual use, an information recording disk rotates at a speed of at least 3,600 rpm. In similation of the actual operation, if a glass disk is set on a prescribed jig modeled after the actual driving mechanism and rotated, a high tension is exerted to the inner periphery due to a centrifugal force at a rotational speed of from 30,000 to 50,000 rpm, whereupon the disk is likely to break starting from a flaw formed on the inner periphery or in its vicinity during the processing into the disk shape.

Or, when a stainless steel cylinder having a diameter slightly larger than the inner diameter of the disk is pressed concentrically against the disk while supporting it along its outer periphery, it is observed that the entire disk breaks due to cracks starting from flaws formed along the inner periphery or in its vicinity of the disk.

As methods to overcome these problems and to increase the strength of the glass itself, the above-mentioned (1) air quenching method, (2) ion exchange method and (3) etching method may be mentioned. However, the methods (1) and (2) involve high temperature treatment and are not free from the possibility that the glass itself deforms or warps. Further, depending upon the composition of the glass, there is a case where the glass can not chemically be strengthened. Therefore, these methods lack in general applicability.

On the other hand, the method (3) has a problem that in the subsequent handling, the glass is likely to receive flaws, whereby the strength decreases. To maintain the high strength, it is proposed to coat an organic polymer as a protective layer on the etched glass surface. This method is satisfactory for maintaining the strength under a usual atmosphere. However, there is a problem such that the protective layer swells in a high humidity environment, or it may happen that the temperature of the disk locally increases to a level higher than the melting point of the organic polymer when a magnetic layer is formed by sputtering. Therefore, this method may not necessarily be satisfactory.

The object of the present invention is to overcome the above-mentioned drawbacks of the conventional techniques.

Very small flaws so-called Griffith flaws present on a glass surface are believed to be the cause for the susceptivity of glass to breakage and explain the reason why glass is usually far weaker than the theoretical strength. When a stress is imparted to the glass, it deforms in a direction to enlarge the flaws, and the stress concentrates at the leading ends of such flaws, whereby cracks grow to lead to breakage. The conventional method for reinforcement is to reduce the concentration of the stress to the leading ends of flaws by forming a compression stress layer on the glass surface. Whereas, the present invention is to reduce the concentration of the stress at the leading ends of flaws by forming a certain specific coating film on the glass surface and thereby reducing the enlargement of the flaws due to the stress.

Further, in the case of a cathode ray tube, when a glass bulb structure having $\sigma_{Vmax}$ set within the above-mentioned range of from 60 to 80 kg/cm$^2$ is adopted to guarantee the sufficient hydraulic pressure strength, the weight of the panel portion of a glass bulb for a cathode ray tube for a color television having a useful screen with an aspect ratio of 4:3, increases substantially in proportion to the 2nd to 2.4th power of the maximum diameter. Accordingly, the productivity of a large size cathode ray tube, particularly the productivity of the glass bulb, will be extremely poor, and the required materials and costs will substantially be increased. Therefore, in a large size bulb having its weight reduced and with the wall thickness reduced over the conventional bulb, the maximum tension $\sigma_{Vmax}$ will be as low as from 70 to 110 kg/cm$^2$ from its

3

structure. and it will thus have a structure wherein cracks are likely to grow on its surface. On the other hand, if $\sigma_{Vmax}$ is higher than 110 kg.cm$^2$, it tends to be difficult to obtain a hydraulic pressure strength of 3.0 kg cm$^2$ or higher from its structure. and further reduction of the weight or the wall thickness tends to be difficult. To solve such problems, several methods for improving the surface strength have been proposed. including, for example, (1) a reinforcing method wherein ion exchange treatment is conducted at the surface of a glass bulb to form a compression stress layer and (2) a method wherein a material having a thermal expansion coefficient relatively smaller than the glass material is coated at a high temperature on the glass bulb surface to form a substantial compression stress layer by utilizing the difference in the thermal shrinkage. It is conceivable that by using such methods, the wall thickness of a glass bulb can be reduced to reduce the weight.

However, according to the method (1), high temperature treatment for about 6 to 12 hours is required to form a compression stress layer having an adequate thickness. Therefore, such a method is not practical from the viewpoint of costs for a glass bulb of a large size. On the other hand, the method (2) has a problem that a large tension is formed at the boundary between the region coated with the coating film and the non- coated region. or on the glass surface beneath the coating film, thereby creating another factor for fatigue fracture. According to the present invention, such a problem can be solved by using a coating film having a thermal expansion coefficient substantially equal to or smaller than that of the glass.

It is an object of the present invention to provide a method for increasing the fracture strength of glass products in general.

It is another object of the present invention to overcome the above-mentioned drawbacks in the conventional techniques and to provide a new means for reducing the weight of a large size cathode ray tube by increasing the surface strength of a glass bulb and by adopting a structure whereby the permissible maximum tension is increased.

A further object of the present invention is to provide a glass substrate for an information recording disk whereby the problems of the conventional techniques can be overcome and the probability of breakage of the glass disk substrate during use can be minimized.

The present invention provides a method for reinforcing glass, which comprises coating a film-forming composition comprising one or more metal alkoxides and fine metal oxide particles, on the surface of the glass, in such an amount that a metal oxide coating film to be formed by said composition would have a thickness of at least 1 $\mu$m, followed by heat treatment to form a hardened metal oxide coating film.

In the accompanying drawings,

Figure 1 is a partially cross sectional view of one embodiment of the cathode ray tube of the present invention.

Figure 2(a) is a graph showing the relation between the vacuum stress distribution (KG/cm$^2$) and the wall thickness distribution (mm) on the horizontal axis of a glass bulb for a 29 inch television.

Figure 2(b) is a graph showing the same relation as in Figure 2(a) but on the vertical axis.

The present invention has been made to solve problems of the conventional reinforcing methods such as high production costs, heat treatment at a high temperature, a deformation during the reinforcing process and a limitation in the composition, and it presents a method for increasing the fracture strength of glass products in general.

The coating on the glass surface according to the present invention is intended to prevent the enlargement by the stress of the flaws existing on the glass surface and to reduce the concentration of the stress at the leading ends of the flaws. Therefore, the coating film is required to be a continuous film firmly bonded by a chemical bond to the glass surface and being sufficiently dense and free from micro-cracks. Thus, the coating film is desired to be a metal oxide capable of chemically bonding to OH groups of the glass surface. As its precursor, one or more members selected from the group consisting of metal alkoxides and metal salts such as nitrates, acetates and halogenides, can be used. Particularly preferred is a silicon alkoxide such as ethyl silicate. As the main metal element for this precursor, an element capable of forming a viterous substance, such as Ti, Zr, Al or Na, may be employed. In order to obtain a continuous film which is sufficiently dense and free from micro-cracks, the sol in the coating solution is preferably a hydrophilic oligomer sufficiently hydrolyzed.

The following problem must be taken into account to let the coating film on the glass surface maintain practical high strength. Namely, during the use, flaws are likely to form on the surface of the coating film and on the glass through the coating film, whereby the strength decreases. As a result of a detailed study of this problem, it has been found that when the coating film has cracks extending through its thickness or when cracks are formed so that they extend through the coating film to the glass surface, there is no substantial improvement in the fracture strength. Whereas, it has been found that when the coating film has a substantial thickness, the effects for improvement of the strength can adequately be expected even when flaws are imparted to the coating film itself. This indicates that the above effects are obtained since the coating film of the present invention is a so-called gel film although it is an inorganic film and accordingly flaws such as Griffith flaws which are likely to cause stress concentration, can hardly be formed in the film.

Accordingly, it is most important that even when flaws are formed during the use, they should remain within the coating film. For this purpose, conventional films having a thickness of about 3,000 Å are not adequate, and it has been found desirable that the coating film has a thickness of at least 1 μm as the film thickness of the metal oxide film after the heat treatment. In a case where the glass product is susceptible to even a stronger impact for flaws, cracks of about 20 μm may form. Therefore, it is preferred to form the coating film in a thickness of at least 25 μm. Further, glass has such characteristics that it is practically stable against water or an acid, and it is durable against heat treatment at a high temperature. Accordingly, it is desirable to impart similar properties to the coating film. A coating film having a thickness of not higher than 5 μm may be formed by an inorganic film prepared from a metal alkoxide such as methyl silicate or ethyl silicate and fine particles of an oxide of metal such as Si, Al, Ti or Zr having high heat resistance i.e. not softenable at a temperature of less than 500°C. Whereas, a coating film having a thickness of higher than 5 μm can be made for the first time by a coating film containing organic groups prepared from a metal alkoxide having an organic group such as $R'M(OR)_3$ or $R'_2M(OR)_2$ wherein R is an alkyl group having from 1 to 3 carbon atoms, $R'$ is an alkyl group or a phenyl group, and M is Si, Ti, Zr or Al, and fine particles of an oxide of metal such as Si, Al, Ti or Zr. To obtain a coating film having excellent water resistance, acid resistance and heat resistance (usually up to the strain point of glass of about 500°C), the organic group $R'$ is preferably a methyl group.

Further, the present invention provides a cathode ray tube having a glass bulb comprising a panel portion, a funnel portion and a neck portion, the glass bulb having a region where a maximum tension of from 70 to 110 kg/cm² is created on its surface under atmospheric pressure, wherein a coating film having high density, adhesiveness and heat resistance, which has a Youhg's modulus substantially equal to or higher than that of the glass bulb material and a thermal expansion coefficient substantially equal to or smaller than that of the glass bulb material and which is capable of preventing enlargement of the leading ends of cracks as micro flaws present on the glass surface, is formed at a region of the glass bulb where the tension is 70 kg/cm² or a 80% value of the maximum tension, whichever value is greater.

In a particularly preferred embodiment of the present invention, the above coating film is the one formed by coating a sealing glass for a cathode ray tube, followed by baking and having a thickness within a range of from 50 to 300 μm. Otherwise, the above coating film is the one obtained by coating a sol prepared by dispersing fine metal oxide particles in a sol which is prepared by dissolving one or more members selected from the group consisting of metal alkoxides and metal salts in an organic solvent such as an alcohol and adding water and an acid as a catalyst thereto to have such metal compounds dispersed in a hydrophilic oligomer state, and then baking it, and having a thickness within a range of from 1 to 30 μm. As opposed to the above-mentioned conventional methods (1) and (2) wherein a compression stress layer is formed on the glass bulb surface itself, according to the present invention, the strength is improved by forming a coating film which provides a tensile strength resistant against the tension of the glass bulb surface, whereby the wall thickness of the glass bulb can be made thin as compared with the conventional products, and it is thereby possible to provide a large size cathode ray tube having a light weight and yet having the strength guaranteed.

Figure 1 is a partially cross sectional view illustrating one embodiment of the present invention. The cathode ray tube 1 is made of a glass bulb 2 comprising a panel portion 3, a funnel portion 4 and a neck portion 5. The panel portion 3 for displaying a projected image comprises a panel face 7 and a panel skirt 6 which together with the panel face 7 forms a blend R 9 along the end of the panel skirt 6. The panel pcrtion is sealingly bonded to the funnel portion 4 mounting a deflection coil, to form a sealing portion 10. On the inner side of the panel face 7, a fluorescent layer 12, an aluminum backing 13 and a shadow mask 14 are attached by stud pins 15. The outer periphery of the panel skirt 6 is reinforced by a side surface reinforcing band 18. Reference numeral 16 indicates an inner conductive coating, numeral 17 indicates an electron gun, and numeral 19 indicates a neck sealing portion. According to the present invention, a coating film 8 providing a tensile strength is formed at the region of such a glass bulb 2 for a cathode ray tube, where a tension is created.

As shown in Figures 2(a) and (b), the tension shows substantial peaks particularly in the vicinity of the blend R and at position B on the panel face and at position D on the skirt portion. B is the starting point of $\sigma_{V1}$, and D is the starting point of $\sigma_{V2}$. Accordingly, it is preferred to form a coating film 8 at least at the region containing B and D.

The coating film providing the tensile strength against the tension is preferably the one having a Young's modulus substantially equal to or higher than that of the glass bulb material i.e. 10⁵ kg/cm² and a

5

thermal expansion coefficient substantially equal to or smaller than that of the glass bulb material and having heat resistance as well as a high density and adhesiveness to the glass, whereby enlargement of the leading ends of cracks as fine flaws existing on the glass surface can be prevented. As such a coating film material, a sealing glass for a cathode ray tube or a sol prepared by dispersing fine metal oxide particles in a sol which is prepared by hydrolyzing one or more members selected from the group consisting of metal alkoxides and metal salts to form a hydrophilic oligomer, may be mentioned. Such a material is coated at least on a part of the region where a tension is created, of the glass bulb in which a maximum tension of from 70 to 110 $kg.cm^2$ is created, and baking the coated material to form a coating film.

Such a coating film is preferably formed on the entire region where the tension is created. It is formed at least at the region where the tension is 70 $kg.cm^2$ or a 80% value of the maximum tension, whichever value is greater. The maximum tension of a glass bulb tends to increase as the size increases, as the weight decreases and the wall thickness decreases. For a relatively small size glass bulb having a maximum tension of from about 70 to 90 $kg.cm^2$, it is preferred to form the coating film at a region where the tension is at least 70 $kg cm^2$. For a relatively large size glass bulb having a maximum tension of from about 90 to 110 $kg.cm^2$, it is preferred to form the coating film at a region where the tension is at least the 80% value (tension being from about 70 to 88 $kg.cm^2$) of the maximum tension. Namely, for a relatively small size glass bulb, adequate effects are obtainable by forming the coating film at least at the region where the tension is 70 $kg.cm^2$ or higher. For a relatively large size glass bulb, the object of the present invention can be attained by forming the coating film at least at the region where the tension is around 80 $kg.cm^2$ (from 70 to 88 $kg.cm^2$).

In the present invention, as a method of increasing $\sigma_{SG}$, a method is adopted wherein a material having a heat resistance and a Young's modulus of at least $10^5$ $kg/cm^2$ being substantially equal to or larger than that of the glass bulb material, is coated, followed by heat treatment to form on the glass bulb surface a highly dense strong coating film having high adhesiveness and thereby to provide a tensile strength against the tension, taking into consideration also the prevention of damage caused by a combination of the thermal stress and the vacuum stress during the process for the production of the cathode ray tube.

Namely, the improvement of the strength by the coating layer is brought about by a mechanism such that the presence of the coating layer serves to resist the tension imparted to fine flaws and thereby to prevent enlargement of the leading ends of such flaws, rather than by a conventional mechanism such that fine flaws existing on the glass surface are diminished by the coating, or the thermal shrinkage between the glass bulb and the coating film is utilized to form a compression stress layer.

Accordingly, in order to obtain the effects of such a coating film, it is required that the coating film itself is highly dense and excellent in the adhesiveness to the glass bulb. The material for this purpose is preferably the one which can be firmly bonded to a glass bulb by the reaction thereto by heat treatment after coating.

Further, the Young's modulus of such a coating film is important so that the coating layer provides the tensile strength, and it is required to be at least the same order of about $10^5$ $kg/cm^2$ as the Young's modulus of the glass bulb material and preferably higher than that. More preferably, it is from $10^5$ to $10^7$ $kg/cm^2$. As to the upper limit, there is no particular restriction. However, as a substance which can be coated intimately as a dense coating film on glass, substances having a Young's modulus of greater than $10^7$ $kg/cm^2$ are mostly metals, which are undesirable.

To further improve the effects by such tensile strength, it is desirable that the residual stress of such a coating layer will not be a tension, and the thermal expansion coefficient of the coating material within a range of from room temperature to the baking treatment temperature of the coating film, is substantially equal to or smaller than the thermal expansion coefficient of the glass bulb material.

Such a coating material of the present invention may, for example, be a sealing glass frit for a cathode ray tube such as a devitrifiable solder glass of $PbO-ZnO-B_2O_3$ system, or a composition prepared by mixing a devitrifiable solder glass having the rigidity improved by adding an alumina filler or a low expansion filler to the devitrifiable solder glass, to a vehicle comprising an organic viscosity-increasing agent such as ethyl cellulose or nitro cellulose and an organic solvent such as isoamyl acetate. The one having an alumina filler or a low expansion filler incorporated, is preferred. Such a devitrifiable solder glass is excellent in the heat resistance and flows at a temperature of from 420 to 440 °C. The crystallized glass will be melted but at a temperature of about 500 °C by reheating, and therefore, it can be maintained in a rigid solid state and is sufficiently durable against the temperature of from 380 to 400 °C in the evacuation step. Such a devitrifiable solder glass is dissolved in a solvent, coated on the glass bulb surface at room temperature, then dried and baked to form a strong coating film intimately bonded to the glass surface. The average crystal grain size of the devitrifiable solder glass during the baking is at a level of from 40 to 50 $\mu m$. Therefore, in order to maintain the strength, the film thickness is preferably at least 50 $\mu m$. On the

other hand, if the thickness exceeds 300 $\mu$m, it tends to flow to form a thickened edge portion when melted at a temperature of about 420° C, whereby a problem of stress concentration is likely to result along the edge portion of the coating film. Accordingly, when the devitrifiable solder glass is employed, the thickness of the coating film is preferably within a range of from 50 to 300 $\mu$m.

As another coating material according to the present invention, the one obtained by dispersing fine particles of a metal oxide to a sol which is prepared by hydrolyzing one or more members of metal alkoxides and metal salts which are capable of bonding to OH groups of the glass surface, particularly a silicon alkoxide such as ethyl silicate, to let them present in an hydrophilic oligomer state, may be mentioned.

The metal alkoxides include, for example, ethyl silicate, methyl silicate, a silicon alkoxide, a titanium alkoxide and a zircon alkoxide. The metal salts include, for example, tetrachlorosilane and sodium nitrate. The fine metal oxide particles to be added and dispersed in the sol, include, for example, $SiO_2$, $TiO_2$, $Al_2O_3$ and $ZrO_2$. These fine particles preferably have a particle size of from 100 to 1,000 Å. In such a case, the coating film preferably has a thickness within a range of from 1 to 30 $\mu$m. In view of the abrasion resistance, the thickness is required to be at least 1 $\mu$m. On the other hand, in order to prevent the loss of the high density to be caused by the formation of micro-cracks due to the difference in the thermal expansion or the volume shrinkage during gelation, it is desired to control the thickness to be not higher than about 30 $\mu$m.

The process for the production of a cathode ray tube comprises a complicated process including coating of a fluorescent material, forming an aluminum backing, sealing of a glass bulb, mounting and sealing in an electron gun and evacuation, and a transporting process, whereby the probability of flaws imparted to the glass bulb is high. Therefore, with a view to provide adequate abrasion resistance and tensile strength to the coating film, the thickness is required to be at least 1 $\mu$m. The upper limit may be determined depending upon the coating efficiency of the coating film. The thickness of the coating film may be increased by repeating the operation of coating, drying and baking.

When the practical strength of the glass bulb having the coating film thus formed is represented by $\sigma'_{SG}$ and the allowable threshold value of the tension under atmospheric pressure is represented by $\sigma'_{Vmax}$ the hydraulic pressure strength at the same level as the conventional glass bulb can be guaranteed if the relation of $\sigma'_{Vmax} < (P_a \cdot P_s) \sigma'_{SG}$ is satisfied as in the case of the above-mentioned conventional glass bulb without a coating film. Therefore, $\sigma'_{Vmax}$ can be made larger than $\sigma_{Vmax}$ i.e. a level corresponding to the practical strength of the glass bulb.

Namely, by applying the coating film at the tension region where breakage is likely to take place, it is possible to reduce the weight by changing the glass bulb structure while maintaining the hydraulic pressure strength at the same level as the conventional glass bulb.

Such an improvement of the strength by the coating film serves not only to prevent the fatigue fracture due to the atmospheric pressure after completion of a cathode ray tube, but also to prevent the breakage due to heat during the production process by imparting heat resistance sufficient to be durable in the evacuation step where it is held at a high temperature of a level of 380° C.

Accordingly, it is necessary to form the coating film prior to such a heating step. Such can be done, for example, by conducting the coating prior to sealing of the panel portion and the funnel portion in the process for the production of e.g. a color television and by conducting baking treatment of the coating film depending upon the heat treatment condition for sealing, which is preferable from the viewpoint of energy saving.

The present invention also provides a glass substrate for an information recording disk which has, at least along the inner peripheral portion of a doughnut-shaped glass substrate, a coating film formed by hardening a film-forming composition for the reinforcement of glass, prepared by dispersing fine metal oxide particles having OH groups on their surface, in a sol which is prepared by dissolving one or more members selected from the group consisting of metal alkoxides and metal salts, in an organic solvent such as an alcohol and adding water and an acid thereto to have such compounds dispersed in a hydrophilic oligomer state.

The above information recording disk may be a magnetic disk, an optical disk or a magneto-optical disk.

It is particularly preferred that the above coating film is formed on the side surface of the inner periphery, or on the side surface of the inner periphery and on the surface portion along the inner periphery, of the doughnut-shaped substrate.

Further, the thickness of the above coating film is preferably within a range of from 0.2 to 50 $\mu$m, more preferably from 1 to 50 $\mu$m, to accomplish the objects of the present invention.

If the thickness is less than 0.2 $\mu$m, a flaw formed anew during the subsequent handling, may protrude through the film and may damage a glass disk again. If the film has a thickness of at least 1 $\mu$m, it is practically strong.

On the other hand, if the film thickness exceeds 50 $\mu$m, it becomes difficult to form a uniform film by a coating method without cracking, or there will be a problem of peeling.

The present invention is intended to reduce enlargement of flaws due to a stress by forming a certain specific coating film such as a metal oxide film on a glass surface and thereby to reduce the stress concentration at the leading ends of the flaws.

The stress intensifying factor $k_1$ of glass is represented by the following equation:

$$k_1 = \sigma y \sqrt{a}$$

starting point of fracture, $\sigma$ is the tension and y is a where a is the crack radius of a fine flaw as the constant determined by the loading state and the position and shape of the flaw. Fracture of glass is considered to start when the relation of $K_1 \geq k_{1c}$ is satisfied, where $k_{1c}$ is the fracture toughness value of glass. Here, $k_{1c}$ has a constant value of a level of from 0.63 to 0.75MPam$^{1/2}$ (M: million = $10^6$, Pa: pascal, m: meter). Accordingly, the practical strength $\sigma_{SG}$ of a glass bulb may be represented by $G_{SG} = k_{1c} (y \sqrt{a})$, and it can be increased by reducing the value of $y \sqrt{a}$ which is determined by the loading state and the size, position and shape of the flaw.

Now, the present invention will be described in further detail with reference to Examples. However, it should be understood that the present invention is by no means restricted by such specific Examples.

EXAMPLE 1

Mixed to ethyl silicate were 8 mol times of ethanol and 11 mol times of an acidic aqueous solution (pH = 2-3), and refluxing was conducted at about 90°C for 3 hours to obtain a sol comprising a sufficiently hydrolyzed siloxane oligomer. Added thereto was Aerosil® (diameter: about 400 Å, density: 2.2 g/cm$^3$) formed by a gas phase method in the same mol amount as the ethyl silicate, and the mixture was stirred by an ultrasonic homogenizer to obtain a uniform suspension. This suspension was coated as a coating solution to a sample piece of 5 mm x 5 mm x 60 mm cut out from a panel glass by meniscus coating at a coating speed of 20 cm/min. To the sample piece, a flaw having a depth of about 0.1 mm was preliminarily imparted by a Vickers indentor under a load of 1 kg. Then, the coated sample piece was dried at 60°C for 5 minutes and then baked at 440°C for 30 minutes. The thickness of the coating film thus formed was about 2 $\mu$m. The three point flexural strength of the flaw-imparted sample piece treated with such an inorganic film was about 800 kg/cm$^2$, which is higher by about 1.6 times than the three point flexural strength of about 500 kg/cm$^2$ of the flaw-imparted sample piece without such a coating film.

EXAMPLE 2

Mixed to ethyl silicate were 8 mol times of ethanol and 11 mol times of an acidic aqueous solution (pH = 2-3), and refluxing was conducted at about 90°C for 3 hours to obtain a sufficiently hydrolyzed siloxane oligomer sol. Added to the sol were superfine alumina particles (diameter: about 500 Å) in the same mol amount as the ethyl silicate. The mixture was thoroughly stirred. This suspension mixture was subjected to an ultrasonic homogenizer to obtain a uniform dispersion, which was coated to a sample piece of 5 mm x 5 mm x 60 mm cut out from a panel glass, by meniscus coating at a coating speed of 20 cm/min. On the coating surface of this sample piece, a flaw was preliminarily imparted by a Vickers indentor under a load of 1 kg. Then, the coated piece was dried at 60°C for 5 minutes and then baked at 440°C for 30 minutes. The coating film thus formed was found to be a dense vitrous coating film having a thickness of 10 $\mu$m. The three point flexural strength of the flaw-imparted sample piece coated with such a vitrous coating film, was about 800 kg/cm$^2$, which is higher by about 1.6 times than the three point flexural strength of about 500 kg/cm$^2$ of the flaw-imparted sample piece without such a coating film.

EXAMPLE 3

Mixed to ethyl silicate were 8 mol times of ethanol and 11 mol times of an acidic aqueous solution (pH = 2-3), and refluxing was conducted at 90°C for 3 hours to obtain a sufficiently hydrolyzed siloxane oligomer sol. Added to the sol were superfine titania particles (diameter: about 500 Å) in the same molar amount as the ethyl silicate. The mixture was thoroughly stirred. This suspension mixture was subjected to an ultrasonic homogenizer to obtain a uniform dispersion, which was coated on a sample piece of 5 mm x 5 mm x 60 mm cut out from a panel glass, by meniscus coating at a coating speed of 20 cm/min. On the coating surface of this sample piece, a flaw was preliminarily imparted by a Vickers indentor under a load of 1 kg. Then, the coated sample piece was dried at 60°C for 5 minutes and baked at 440°C for 30 minutes. The coating film thus formed was found to be a dense vitrous coating film having a thickness of 10 $\mu$m. The three point flexural strength of the flaw-imparted sample piece coated with such vitrous coating film, was about 750 kg/cm$^2$, which is higher by about 1.5 times than the three point flexural strength of about 500 kg.cm$^2$ of the flaw-imparted sample piece without such a coating film.

EXAMPLE 4

Mixed to ethyl silicate were 8 mol times of ethanol and 11 mol times of an acidic aqueous solution (pH = 2-3), and refluxing was conducted at about 90°C for 3 hours to obtain a sufficiently hydrolyzed siloxane oligomer sol. Added to the sol were superfine zirconia particles (diameter: about 100 Å) in the same mol amount as the ethyl silicate. The mixture was thoroughly stirred. This suspension mixture was subjected to an ultrasonic homogenizer to obtain a uniform dispersion, which was coated to a sample piece of 5 mm x 5 mm x 60 mm cut out from a panel glass, by meniscus coating at a coating speed of 20 cm/min. To the coating surface of the sample piece, a flaw was preliminarily imparted by a Vickers indentor under a load of 1 kg. Then, the coated test piece was dried at 60°C for 5 minutes and then baked at 440°C for 30 minutes. The coating film thus formed was found to be a dense vitrous coating film having a thickness of 10 $\mu$m. The three point flexural strength of the flaw-imparted piece coated with such vitrous coating film, was about 800 kg/cm$^2$, which is higher by about 1.6 times than the three point flexural strength of about 500 kg/cm$^2$ of the flaw-imparted sample piece without such a coating film.

EXAMPLE 5

Mixed to methyl silicate were 10 mol times of ethanol and 2 mol times of an acidic aqueous solution (pH = 2-3), and the mixture was stirred at 30°C for 2 hours to obtain a sufficiently hydrolyzed siloxane oligomer sol. Added thereto were an equal molar amount of titanium isopropoxide solution and Aerosil dissolved in 10 mol times of ethanol and a small amount of a surfactant such as Triton X-100 (tradename). The mixture was stirred and then subjected to ultrasonic homogenizer to obtain a uniform dispersion, which was used as a coating solution. This coating solution was coated by meniscus coating to a flaw-imparted sample piece similar to the one used in Example 4, followed by similar heat treatment. The thickness of the coating film thus formed was 3 $\mu$m, and the three point flexural strength was about 750 kg/cm$^2$.

EXAMPLE 6

Mixed to methyl silicate were 10 mol times of ethanol and 2 mol times of an acidic aqueous solution (pH = 2-3), and the mixture was stirred at 30°C for 2 hours to obtain a sufficiently hydrolyzed siloxane oligomer sol. Added to the sol were an equal molar amount of zirconium n-butoxide solution and Aerosil dissolved in 10 mol times of isopropanol, to obtain a coating solution. This coating solution was coated by dip coating to a flaw-imparted sample piece similar to the one used in Example 4, followed by similar heat treatment. The thickness of the coating film thus formed was about 6 $\mu$m, and the three point flexural strength was 760 kg/cm$^2$.

EXAMPLE 7

Mixed to methyl silicate were 10 mol times of ethanol and 2 mol times of an acidic aqueous solution (pH = 2-3), and the mixture was stirred at 30°C for 2 hours to obtain a sufficiently hydrolyzed siloxane oligomer sol. Added thereto were an equal molar amount of aluminum nitrate solution and Aerosil dissolved in 10 mol times of ethanol, to obtain a coating solution.
This coating solution was coated by meniscus coating to a flaw-imparted sample piece similar to the one used in Example 4, followed by similar heat treatment. The thickness of the coating film thus formed was about 2 $\mu$m, and the three point flexural strength was about 750 kg/cm$^2$.

EXAMPLE 8

Mixed to titanium isopropoxide were 10 mol times of isopropanol and 1 mol time of a weakly acidic aqueous solution (pH = 4-5), and the mixture was stirred at room temperature for 2 hours to obtain a partially hydrolyzed sol. Aerosil was added thereto, and the mixture was stirred and then subjected to an ultrasonic homogenizer to obtain a uniform dispersion, which was used as a coating solution. This coating solution was coated by meniscus coating to a flaw-imparted sample piece similar to the one used in Example 4, followed by similar heat treatment. The thickness of the coating film thus formed was about 1 $\mu$m, and the three point flexural strength was about 710 kg·cm$^2$.

EXAMPLE 9

Acetic acid was added to an aqueous dispersion type colloidal silica with a particle size of 130 to 140 Å and having a solid content of 40% by weight, to bring the pH to from 4 to 6. This was gradually added to methyl trimethoxysilane in the same molar amount as the silica. The mixture was stirred at room temperature for more than 4 hours to obtain a siloxane oligomer sol. A small amount of surfactant (cationic or nonionic) was added thereto, and the mixture was sufficiently stirred after the addition to obtain a coating solution.

This coating solution was coated to a sample piece of 5 mm x 5 mm x 60 mm cut out from a panel glass by meniscus coating at a coating speed of 20 cm/min. To the sample piece, a flaw having a depth of about 0.1 mm was preliminarily imparted by a Vickers indentor. Then, the coated sample piece was dried at 100°C for 15 minutes and then baked at 450°C for 30 minutes. The coating film thus formed had a thickness of about 20 $\mu$m and was a transparent film free from light scattering. The three point flexural strength of the flaw-imparted sample piece treated by such a coating film having organic groups, was 800 kg·cm$^2$, which is higher by about 1.6 times than the three point flexural strength of about 500 kg/cm$^2$ of the flaw-imparted sample piece without such a coating film. Further, after the abrasion tests by a Teber abrasion tester® (load: 500 g, wheel No. CS-10) and by Emery paper (# 150), the three point flexural strength was measured in the same manner and was found to be about 800 kg·cm$^2$ on the average. Thus, no change was observed in the effects for the improvement of the strength by the coating film.

EXAMPLE 10

A glass disk composed mainly of a borosilicate and having an outer periphery of 5.25 inches, a thickness of 1.9 mm and an inner periphery of 40 mm (the inner and outer peripheries were tapered as ground by fixed abrasive grains) was immersed in an aqueous mixed acid solution containing 5% of HF and 5% of H$_2$SO$_4$ and left to stand at room temperature for 2 hours, whereby only the inner peripheral portion at which stress concentration at the time of the indentation test mentioned hereinafter was most remarkable, was etched in a depth of about 30 pm. Then, the disk was withdrawn and washed sequentially with city water, deionized water and ethanol and then dried in air.

Here, the same coating solution as used in Example 9 was coated to the inner peripheral portion of the above disk. The disk was then dried at 100°C and then subjected to heat treatment at 200°C for 30 minutes. While supporting the outer periphery, a stainless steel cylinder having a diameter longer by 2 mm than the diameter of the inner periphery was concentrically pressed against the disk, whereby the fracture load was measured. As a result, the fracture strength of the disk treated by this example was 200 kg, which was stronger by about 6.3 times than 30 kg of the non-treated disk.

EXAMPLE 11

A super thin cover glass made of soda lime glass and having a thickness of 100 $\mu$m was immersed in an aqueous mixed acid solution containing 5% of HF and 5% of H$_2$SO$_4$ and left to stand at room temperature for 10 minutes, whereby it was etched in a depth of about 10 $\mu$m. Then, the cover glass was withdrawn, washed sequentially with city water, deionized water and ethanol and then dried in air.

Here, the same coating solution as used in Example 9 was coated by a dip coating method on both sides of the super thin cover glass. Then, the cover glass was dried at 100°C and then subjected to heat treatment at 200°C for 30 minutes. The three point flexural strength was measured, whereby the sample

10

thus subjected to etching and coating treatment was found to have a flexural strength of about 40 kg/mm$^2$, which is higher by about twice than the flexural strength of about 20 kg/mm$^2$ of the non-treated sample.

EXAMPLE 12

A silica fiber having a diameter of 20 μm was subjected to fire polish in an oxyhydrogen flame. Then, the same sol solution as used in Example 9 was coated to the fiber by dip coating. The coated fiber was dried at 100°C and then subjected to heat treatment at 200°C for 30 minutes. The tensile strength was measured, whereby the sample subjected to fire polish and coating treatment had a tensile strength of about 200 kg/cm$^2$, which is stronger by about twice than the tensile strength of about 100 kg/cm$^2$ of the non-treated sample.

EXAMPLE 13

In this example, by using the materials having such properties as identified in Table 1 which are commonly used for a cathode ray tube for a usual color television, a glass bulb having a structure, only the wall thickness distributions of which are shown in Figures 2(a) and (b) in solid lines and which has the same contour as the conventional product (no coating film, hereinafter referred to as sample A) for a 29 inch television, the wall thickness distributions and the stress distributions of which are shown in Figures 2(a) and (b) in broken lines. The stress distributions of this glass bulb are as shown in Figures 2(a) and (b) in solid lines. The compositions of the respective glass materials and coating materials in Table 1 are shown in Table 2. As the coating material, a devitrifiable solder glass of PbO-ZnO-B$_2$O$_3$ system for cathode ray tube ASF1307 which is durable at least at a high temperature during the process and shows a high density and strong adhesion to glass when heat treated and the thermal expansion coefficient of which matches the panel and funnel materials, was used since it was intended also for preventing a damage during the process for the preparation of a cathode ray tube, particularly during a high temperature process for evacuation. The properties of ASF1307 are also shown in Table 1.

Table 1:

| Physical properties of glass materials and coating materials | | | | |
|---|---|---|---|---|
| | Glass materials | | | |
| | Panel glass | Funnel glass | Neck glass | Coating material |
| Tradename | 5008 [1] | 0138 [2] | 0150 [3] | ASF1307 [4] |
| Specific gravity (gr/cm$^3$) | 2.79 | 3.00 | 3.29 | 6.5 |
| Thermal expansion coefficient (/°C) | 98.2 x 10$^{-7}$ | 98.7 x 10$^{-7}$ | 96.5 x 10$^{-7}$ | 98.5 x 10$^{-7}$ |
| Young's modulus (kg/cm$^2$) | 7.5 x 10$^5$ | 6.9 x 10$^5$ | 6.2 x 10$^5$ | 5 x 10$^5$ |
| Poisson's ratio | 0.21 | 0.21 | 0.23 | 0.26 |

1) - 4) All made by Asahi Glass Co., Ltd.

11

Table 2

| | 5008 (wt%) | 0138 (wt%) | 0150 (wt%) | ASF1307 (wt%) |
|---|---|---|---|---|
| $SiO_2$ | 60.5 | 52.0 | 47.5 | 12.0 |
| SrO | 8.0 | - | 2.0 | - |
| BaO | 9.0 | - | - | 2.0 |
| PbO | - | 22.0 | 32.5 | 75.0 |
| $Al_2O_3$ | 3.0 | 5.0 | 3.5 | - |
| CaO | 3.0 | 5.0 | - | - |
| $Na_2O$ | 8.0 | 8.0 | 4.5 | - |
| $K_2O$ | 8.5 | 8.0 | 10.0 | - |
| $B_2O_3$ | - | - | - | 9.0 |
| ZnO | - | - | - | 2.0 |

ASF1307 was dissolved in a vehicle of isoamyl acetate solvent having a small amount of nitrocellulose added thereto. to adjust the viscosity to substantially 50.000 cps. This coating solution was coated at room temperature over the entire periphery of the skirt portion including the $\sigma_{V1}$ starting region at the end of the face of a glass bulb except for the vicinity of the sealing portion of the panel skirt portion (i.e. the entire region where the tension was created, dried and then held at 440° for 40 minutes for baking to form a strong coating film, whereby a glass bulb for a cathode ray tube of the present invention (sample C) was obtained. The thickness of the coating layer was from about 100 to 150 $\mu$m.

The density of ASF1307 was evaluated on the basis of its hardness. The hardness was measured by means of a dynamic micro hardness meter. manufactured by Shimadzu Corporation and was found to be 103 g·f.$\mu$m$^2$, which indicates a sufficient density as compared with the hardness of 50 g·f/$\mu$m$^2$ of a devitrifiable solder glass baked product where the crystallization was inadequate and the density was poor. A satisfactory range of the hardness is from 70 to 200 g·f/$\mu$m$^2$. If the hardness is less than 70 g·f/$\mu$m$^2$, the density will be impaired. On the other hand, it is hardly possible to obtain a devitrifiable solder glass having a hardness exceeling 200 g·f/$\mu$m$^2$.

Further, the adhesiveness of ASF1307 was tested 10 times by 6.15 cross cut test i.e. a testing method for coating material in general according to JIS K 5400. whereby an evaluation point of from 8 to 10 was obtained, which indicates high adhesiveness.

Further, as a comparative product, sample B was prepared, the outer contours of the panel portion and the funnel portion were the same as in sample A, and the wall thickness distribution was changed from Figure 2(a) to the solid line of Figure 2(b) like the product of the present invention. With respect to samples A, B and C thus obtained, the weights of the respective portions were examined, and they were subjected to hydraulic pressure tests, respectively. Samples for the hydraulic pressure tests were prepared by imparting flaws to the glass surface by # 150 Emery paper prior to the formation of a coating film. The weight and the hydraulic pressure strength were as shown in Table 4.

Sample A as a conventional product had a hydraulic pressure strength of about 3.2 kg/cm$^2$ as shown in Table 2, but its fracture starting point was in the vicinity of $\sigma_{V2}$ at the skirt portion on the horizontal axis.

In the case of sample B (no coating film) as a comparative product, the maximum tension increased to a level of $\sigma_{V1}$ = 92.4 kg/cm$^2$ and $\sigma_{V2}$ = 91.3 kg/cm$^2$ on the horizontal axis and $\sigma_{V1}$ = 93.6 kg/cm$^2$ and $\sigma_{V2}$ = 91.8 kg/cm$^2$ on the vertical axis, whereby the hydraulic pressure strength substantially decreased to a level of 2.3 kg/cm$^2$, which is practically useless.

In the example of the present invention. the change in the vacuum stress of the coating film and the weight change were very little and negligible.

In the hydraulic pressure tests, flaws were imparted by # 150 Emery paper to the glass surface prior to the formation of a coating film. Even then, the hydraulic pressure strength increased to a level of 3.9 kg/cm$^2$, and there was no problem at all with respect to the values of $\sigma_{V1}$ and $\sigma_{V2}$ with the structure of sample B.

Namely, in this example, the glass bulb having the coating film has a surface strength $\sigma'_{SG}$ of about 350 kg/cm$^2$, and a hydraulic pressure strength of at least 3.0 kg/cm$^2$ can readily be guaranteed even with a structure set at a level of $\sigma'_{Vmax}$ = 110 kg/cm$^2$.

With respect to the 29 inch glass bulb of this example, the effect for reducing the weight obtained for such a structure was 2.8 kg as shown in Table 2.

EXAMPLE 14

In this example, a uniform dispersion was employed which was prepared by mixing 8 mols of ethanol and 11 mols of an acidic aqueous solution (pH = 2-3) to 1 mol of ethyl silicate to obtain a sufficiently hydrolyzed siloxane oligomer sol and adding thereto Aerosil (diameter: 400 Å, density: 2.2 gr cm$^3$) in the same mol amount as the ethyl silicate, in order to obtain an adequate film thickness taking into consideration the abrasion, etc. during the process. The properties of the Aerosil fine silica particles glass silica gel are shown in Table 3.

Table 3

|  | Fine particles of Aerosil + Silica gel |
|---|---|
| Specific gravity (gr cm$^{-3}$) | 2.21 |
| Thermal expansion coefficient (/ °C) | $5.5 \times 10^{-7}$ |
| Young's modulus (kg cm$^2$) | $6.9 \times 10^{5}$ |
| Poisson's ratio | 0.17 |

The coating solution was coated at the same region as in Example 13 of the surface on which flaws were imparted by # 150 Emery paper, of a 29 inch light weight glass bulb as used in Example 13.

Then, the coated glass bulb was dried at 60°C for 5 minutes and baked at 440°C for 30 minutes. The thickness of the coating film thus formed was about 2 μm. Further, in the same manner as in Example 13, the hardness was measured by a dynamic micro hardness tester and was found to be 380 g·f/μm$^2$, which indicates a sufficient density as compared with the hardness of 230 g·f/μm$^2$ in the case where the drying was conducted at 60°C.

The adhesiveness was tested 10 times by a 6:15 cross cut test i.e. a testing method for coating material in general according to JIS K 5400 in the same manner as in Example 13, whereby an evaluation point of from 8 to 10 was obtained, which indicates high adhesiveness.

Further, a test in which the glass bulb after formation of the coating film was maintained at a high temperature of 460°C for 30 minutes, was repeated twice, and then the hardness was measured, whereby no decrease in the hardness was observed, and it was confirmed that the product had adequate heat resistance.

The weights of various portions and the hydraulic pressure strength of the product of the present invention thus obtained (hereinafter referred to simply as sample D) are also shown in Table 4. From the hydraulic pressure test, the hydraulic pressure strength was found to be 3.7 kg/cm$^2$, which was higher than the guaranteed value of 3.0 kg/cm$^2$, like in Example 13.

Table 4

|  | Sample A (Conventional product) | Sample B (Comparative light weight bulb) | Sample C (Example 13) | Sample D (Example 14) |
|---|---|---|---|---|
| Panel weight | 16.9 kg | 14.3 kg | 14.3 kg | 14.3 kg |
| Funnel weight | 8.2 kg | 8.0 kg | 8.0 kg | 8.0 kg |
| Bulb weight | 25.1 kg | 22.3 kg | 22.3 kg | 22.3 kg |
| Coating material | - | - | Devitrifiable solder glass | Silicasol solution |
| Coating thickness | - | - | 100 - 150 μm | 2 μm |
| Hydraulic pressure strength | 3.2 kg/cm$^2$ | 2.3 kg/cm$^2$ | 3.9 kg/cm$^2$ | 3.7 kg/cm$^2$ |

From the foregoing results, it is evident that the products of the present invention (samples C and D) are light in weight at a level of 44.6 kg which is lighter by 5.6 kg than the weight of 50.2 kg of the conventional product (sample A), and yet the hydraulic pressure strength is higher by from 0.5 to 0.7 kg/cm$^2$ than the conventional product. Further, with a light weight glass bulb having the same structure as the products of the present invention but having no coating film, the hydraulic pressure strength is as low as 2.3 kg.cm$^2$, which is about 60% of the products of the present invention. This indicates the effects of the coating film for the improvement in the strength.

EXAMPLE 15

Water having the pH adjusted to a level of 4 to 6 with 3 mol ratio of acetic acid, was gradually dropwise added to methyl trimethoxysilane or methyl triethoxysilane, and the mixture was stirred at room temperature for at least 4 hours (at least 10 hours in the case of methyl triethoxysilane). Then, a lower alcohol sample such as methanol or ethanol was added for dilution to obtain a siloxane oligomer sol. Further, 1 2 molar ratio of titania particles of submicron size and a small amount of a surfactant were added thereto, and the mixture was thoroughly stirred to obtain a coating solution. This coating solution was coated by a spray coating method to the same region of a 29 inch light weight glass bulb as used in Example 13 or 14, which was preliminarily abraded by # 150 Emery paper. Then, the coated glass bulb was dried at 100° C for 30 minutes, and then by using a frit, it was connected and sealed to a funnel portion by heat treatment at 440° C for 40 minutes. The thickness of the coating film was about 20 μm.

By using the 29 inch light weight glass bulb thus coated and the non-coated glass bulb of the same type abraded by # 150 Emery paper, hydraulic pressure tests were conducted, whereby the former had a hydraulic pressure strength of 6.9 kg/cm$^2$ and the latter add a hydraulic pressure strength of 2.3 kg/cm$^2$. Thus, it was confirmed that the strength was improved by about 3 times by the coating film. And the strength was higher than the guaranteed value of 3.0 kg/cm$^2$. Further, the glass bulb was abraded by # 150 Emery paper from above the coating film, and then the hydraulic pressure strength was measured and found to be 6.9 kg.cm$^2$. Thus, no decrease in the strength was observed.

Further, in the same manner as in Example 13, the hardness was measured by a dynamic micro hardness tester and was found to be 80 g•f/μm$^2$, which indicates a sufficient density. Further, a test wherein the glass bulb after forming the coating film was maintained at a high temperature of 460° C for 30 minutes, was repeated twice, and then the hardness was measured, whereby no decrease in the hardness was observed, and it was confirmed that the product had adequate heat resistance.·

A reinforced glass having abrasion resistance can be prepared by coating a coating film such as a metal oxide film obtained by using the composition of the present invention or by coating such a coating film following etching or fire polish.

The present invention provides the effects of the coating film for improving the fracture strength of the glass surface in a cathode ray tube and also provides the effects for reducing the weight of a glass bulb by adopting a glass bulb structure wherein the maximum tension of the vacuum stress determined by the glass bulb structure and the physical properties of the material at the region where the coating film is provided, is at a level of at least 70 kg/cm$^2$ and less than 110 kg/cm$^2$.

Further, it is effective for the prevention of the breakage by heat of a cathode ray tube during the evacuation step by making the coating film heat resistant. This effect is particularly remarkable when the coating film is formed at a region where flaws are likely to form as a jig is in contact during the production process and a tension is created by a relatively high heat.

As another merit, in the case of a side implosion-preventive reinforcing type cathode ray tube using a tensile strength of a band, such a reinforcing effect acts in a direction to cancel out the vacuum stress, whereby usually the maximum value of the tension and the tension starting region usually become small, but it may happen that a tension region is created anew, for example, at a funnel portion. The above-mentioned effects are obtainable even when the coating film is formed on such a region.

EXAMPLE 16

A glass disk composed mainly of a borosilicate and having an outer diameter of 5.25 inches and thickness of 1.9 mm and an inner diameter of 40 mm (the inner and outer peripheries were tapered as ground by fixed abrasive grains of # 325) was coated with the following solution along the side surface of the inner periphery and along the surface portion within 1 mm from the inner peripheral edge.

Colloidal silica (OSCAL, tradename, manufactured by Shokubai Kasei Kogyo K. K.) dispersed in ethanol and a sol obtained by hydrolyzing ethyl silicate with a 0.3N $HNO_3$ aqueous solution in the presence of ethanol, were mixed (the molar ratio of ethyl silicate/water ethanol = 1 8/11). The mixture was adjusted with ethanol so that the $SiO_2$ solid content in the entire solution would be 8% by weight. The $SiO_2$ content converted from the colloidal silica was 6% by weight of the total $SiO_2$.

The coating method was such that while masking the glass disk other than the portions to be coated, the entire glass disk was immersed in said solution and withdrawn under a nitrogen atmosphere at a rate of 20 cm/min.

With the masking attached thereon, the disk was once dried at 60°C for 30 minutes, and after removing the masking, it was baked. The temperature was raised to 400°C at a rate of 10°C/min and maintained at that temperature for 10 minutes to form a continuous $SiO_2$ film having a thickness of 2 $\mu$m.

While supporting the periphery of the glass disk having such a continuous $SiO_2$ film thus obtained, a stainless steel cylinder having a diameter longer by 2 mm than the inner diameter of the disk was concentrically pressed against the disk, and the fracture load was measured. (The fracture load measurement by this method will be referred to hereinafter as an indentation test of outer periphery supporting and inner periphery pressing type.)

As a result, the fracture load of the glass disk treated by this Example was 60 kg, which is substantially higher than the fracture load of 28 kg of the non-treated glass disk.

## EXAMPLE 17

A titanium oxide sol (manufactured by Taki Kagaku K. K., size of primary particles: 100 Å, $TiO_2$ concentration: 6% by weight) was coated along the side surface and the surface portion of the inner periphery of the same glass disk as used in Example 16, followed by baking at 500°C. This operation was repeated 15 times to obtain a glass disk having a crystalline $TiO_2$ film having a thickness of 1.2 $\mu$m.

The glass disk was subjected to the indentation test of outer periphery supporting and inner periphery pressing type, whereby the fracture load of the glass disk having the $TiO_2$ film was 64 kg, while the fracture load of the non-treated glass disk was 23 kg.

Further, the glass disk having such a film was left to stand at 85°C under a relative humidity of 95% for 200 hours, and then the fracture load was measured in the same manner, whereby the fracture load was 62 kg, which proves that the reinforcement by the film formation along the side surface and the surface portion of the inner periphery of the disk can be maintained even under a humidity condition.

## EXAMPLE 18

42.5% by weight of monomethyltrimethoxysilane (chemical formula: $CH_3Si(OCH_3)_3$), 56.6% by weight of water glass-type colloidal silica (Ludox HS-40, manufactured by Dupont Company) and 0.9% by weight of acetic acid were mixed and reacted at 25°C for 4 hours to obtain a coating solution. The coating solution was left to stand at 25°C, and when the viscosity became 10 cp, this solution was coated on the side surface of the inner periphery and on the surface portion along the inner periphery of an alkali-free glass disk having the same shape, in the same manner as in Example 16. The glass disk was dried at 110°C for one hour and then baked at 400°C to obtain a glass disk having a $SiO_2$ film having a thickness of 5 $\mu$m and partially containing an organic group.

This disk was chucked by a prescribed jig and rotated, whereby the glass disk having the above treatment applied did not break up to 58,000 rpm, while the non-treated disk broke at 24,000 rpm.

## EXAMPLE 19

To methyltrimethoxysilane, 3 mol times of water (the pH adjusted to a level of from 4 to 6 with acetic acid) was gradually dropwise added, and the mixture was stirred at room temperature for at least 4 hours. Then, methanol was added for dilution, and 1/2 mol time of titania particles of submicron sizes and a small amount of a surfactant were added thereto. The mixture was thoroughly stirred to obtain a coating solution.

A glass disk having an outer diameter of 3.5 inches, a thickness of 1.27 mm and an inner diameter of 2.0 cm made from a soda lime silicate glass sheet, was immersed in an aqueous solution comprising 50 wt% HF and 40 wt% NH₄F in a volume ratio of 1:5 and maintained at 40°C for 2 minutes. By this etching, the disk underwent a weight reduction of 930 µg.cm². The above-mentioned coating solution was coated only along the side surface of the inner periphery of the glass disk thus etched, by a roll coater, then dried, heated to 300°C in 30 minutes and maintained at 300°C for 10 minutes, and then it was cooled in the furnace, to obtain a glass disk having a film of 2.5 µm formed along the side surface of the inner periphery.

The glass disk thus obtained was once pushed into a cylinder (length: 48 mm) made of soft steel and having a diameter smaller by 2.100 mm than the inner diameter of the disk and then withdrawn. Thereafter, it was subjected to the indentation test of outer periphery supporting and inner periphery pressing type. The glass disk having a continuous film along the side surface of the inner periphery had a fracture load of 146 kg, while the one having only etching treatment applied had a fracture load of 33 kg. Thus, by this Example, the strength of the glass disk can adequately be maintained without being damaged.

## Claims

1. A method for reinforcing glass, which comprises coating a film-forming composition comprising one or more metal alkoxides and fine metal oxide particles, on the surface of the glass, in such an amount that a metal oxide coating film to be formed by said composition would have a thickness of at least 1 µm, followed by heat treatment to form a hardened metal oxide coating film.

2. The method according to Claim 1, wherein the film-forming composition is a sol prepared by dispersing fine metal oxide particles having OH groups on their surface in a sol which is prepared by dissolving one or more members selected from the group consisting of metal alkoxides and metal salts in an organic solvent such as alcohol and adding water and an acid thereto to have such compounds dispersed in a hydrophilic oligomer state, and the heat treatment is conducted at a temperature of not higher than the strain point of the glass.

3. The method according to Claim 1, wherein the film-forming composition is a sol prepared by dispersing fine metal oxide particles in a sol which is prepared by dissolving one or more members selected from the group consisting of metal alkoxides of the formula $M(OR)_4$, $R'M(OR)_3$ and $R'_2M(OR)_2$ wherein R is an alkyl group having from 1 to 3 carbon atoms, R' is an alkyl group or a phenyl group, and M is Si, Ti, Zr or Al, in an organic solvent such as an alcohol and adding water and an acid thereto to have such compounds dispersed in a hydrophilic oligomer state, and such a film-forming composition is coated to a portion of the glass desired to be reinforced, in such an amount that a metal oxide coating film to be formed by said composition would have a thickness of at least 5 µm, followed by heat treatment to form a hardened metal oxide coating film.

4. The method according to Claim 3, wherein the fine metal oxide particles contain, as the constituting metal element, an element capable of forming a metal oxide having high heat resistance selected from the group consisting of Si, Al, Ti and Zr.

5. The method according to Claim 1, wherein the metal oxide coating film is formed on a portion of the glass surface where stress concentration is likely to occur.

6. The method according to Claim 1, wherein the metal oxide coating film is formed after removing microcracks from the entire glass surface or a part thereof by a method such as chemical etching or fire polish.

7. The method according to Claim 1, wherein the metal oxide coating film is a continuous film chemically bonded to the glass and being free from cracks extending through the film to the glass surface.

8. A film-forming composition for the reinforcement of glass, prepared by dispersing fine metal oxide particles having OH groups on their surface, in a sol which is prepared by dissolving one or more metal alkoxides in an organic solvent such as an alcohol and adding water and an acid thereto to have such compounds dispersed in a hydrophilic oligomer state.

9. The film-forming composition according to Claim 8, which is prepared by dispersing fine metal oxide particles having OH groups on their surface, in a sol which is prepared by dissolving one or more members selected from the group consisting of metal alkoxides and metal salts, in an organic solvent such as an alcohol and adding water and an acid thereto to have such compounds dispersed in a hydrophilic oligomer state.

10. The film-forming composition according to Claim 9, wherein metal alkoxides are represented by the formulas $M(OR)_4$, $R'M(OR)_3$ and $R'_2M(OR)_2$ wherein R is an alkyl group having from 1 to 3 carbon atoms, R' is an alkyl group or a phenyl group, and M is Si, Ti, Zr or Al.

11. The film-forming composition according to Claim 9, wherein the fine metal oxide particles contain as the constituting metal element, an element capable of forming a metal oxide having high heat resistance,

selected from the group consisting of Si, Al, Ti and Zr.

12. A film-forming composition for the reinforcement of glass, prepared by mixing devitrifiable solder glass in a vehicle comprising a viscosity-increasing organic agent and an organic solvent.

13. A glass article having on its entire surface, or on a part of the surface, a coating film formed by hardening a film-forming composition for the reinforcement of glass, prepared by dispersing fine metal oxide particles having OH groups on their surface, in a sol which is prepared by dissolving one or more members selected from the group consisting of metal alkoxides and metal salts, in an organic solvent such as an alcohol and adding water and an acid thereto to have such compounds dispersed in a hydrophilic oligomer state.

14. The glass article according to Claim 13, wherein said coating film is formed at least along the inner peripheral portion of a doughnut-shaped glass substrate for information recording disk.

15. The glass article according to Claim 14, wherein the information recording disk is a magnetic disk, an optical disk or a magneto-optical disk.

16. A cathode ray tube having a glass bulb comprising a panel portion, a funnel portion and a neck portion, said glass bulb having a region where a maximum tension of from 70 to 110 $kg/cm^2$ is created on its surface under atmospheric pressure, wherein a coating film having high density, adhesiveness and heat resistance, which has a Young's modulus substantially equal to or higher than that of the glass bulb material and a thermal expansion coefficient substantially equal to or smaller than that of the glass bulb material and which is capable of preventing enlargement of the leading ends of cracks as micro flaws present on the glass surface, is formed at a region of the glass bulb where the tension is 70 $kg/cm^2$ or a 80% value of the maximum tension, whichever value is greater.

17. The cathode ray tube according to Claim 16, wherein the coating film is a coating film having a thickness of from 1 to 30 $\mu$m formed by hardening a film-forming composition for the reinforcement of glass, prepared by dispersing fine metal oxide particles having OH groups on their surface, in a sol which is prepared by dissolving one or more members selected from the group consisting of metal alkoxides and metal salts, in an organic solvent such as an alcohol and adding water and an acid thereto to have such compounds dispersed in a hydrophilic oligomer state.

18. The cathode ray tube according to Claim 16, wherein the coating film is a coating film having a thickness of from 50 to 300 $\mu$m formed by hardening a film-forming composition for the reinforcement of glass prepared by mixing devitrifiable solder glass to a vehicle comprising an organic viscosity-increasing agent and an organic solvent.

19. A cathode ray tube having a glass bulb comprising a panel portion, a funnel portion and a neck portion, wherein a coating film having high density, adhesiveness and heat resistance, which has a Young's modulus substantially equal to or higher than that of the glass bulb material and a thermal expansion coefficient substantially equal to or smaller than that of the glass bulb material and which is capable of preventing enlargement of the leading ends of the cracks as micro flaws present on the glass surface, is formed at a peripheral portion of a panel face on the outer surface of the panel portion and at a region covering a part of a panel skirt portion.

20. The cathode ray tube according to Claim 19, wherein the coating film is a coating film having a thickness of from 1 to 30 $\mu$m formed by hardening a film-forming composition for the reinforcement of glass, prepared by dispersing fine metal oxide particles having OH groups on their surface, in a sol which is prepared by dissolving one or more members selected from the group consisting of metal alkoxides and metal salts, in an organic solvent such as an alcohol and adding water and an acid thereto to have such compounds dispersed in a hydrophilic oligomer state.

21. The cathode ray tube according to Claim 19, wherein the coating film is a coating film having a thickness of from 50 to 300 $\mu$m formed by hardening a film-forming composition for the reinforcement of glass, prepared by mixing devitrifiable solder glass to a vehicle comprising an organic viscosity-increasing agent and an organic solvent.

# FIGURE · I

# FIGURE 2(a)

# FIGURE 2 (b)